# EUROPEAN PATENT APPLICATION

(11) **EP 1 935 910 A2**
(43) Date of publication of application: **25.06.2008**
(21) Application number: 07024628.5
(22) Date of filing: 19.12.2007
(51) Int. Cl.: C08F 220/46

(54) **Process for producing acrylonitrile-containing polymer latex**

(30) Priority: 19.12.2006 JP 2006340856; 13.03.2007 JP 2007063212
(71) Applicant: FUJIFILM Corporation, Minato-ku Tokyo (JP)
(72) Inventor: Araki, Katsumi c/o Fujifilm Corporation, Shizuoka (JP)
(74) Representative: HOFFMANN EITLE

(57) **Abstract**

A process for producing a polymer latex includes a step of mixing at least one kind of polymerizable monomer with water and a polymerization initiator to perform a polymerization, wherein the at least one kind of polymerizable monomer includes an acrylonitrile in an amount of 50 mass% or more based on a total amount of the at least one kind of polymerizable monomer.

## Description

### Background of the Invention

### 1. Field of the Invention

The present invention relates to a process for producing an acrylonitrile-containing polymer latex. More specifically, the present invention relates to a process for the industrially advantageous production of a polymer latex having a high acrylonitrile content and exhibiting excellent dispersion stability and excellent aptitude for environment without containing a residual monomer.

### 2. Description of the Related Art

The acrylonitrile-based resin is a thermoplastic resin showing an excellent gas barrier property based on intermolecular bonding peculiar to the nitrile group and being excellent in the resistance to chemicals such as acid, alkali and organic solvent as well as in the mechanophysical properties such as flexural modulus, strength and creep resistance, and its utility value as a packaging material, for example, in the fields of food, agrochemical or medical preparations and cosmetics or as a film, sheet or container material is recently acknowledged.

However, the acrylonitrile-based polymer in general is strong in the cohesive force between polymer particles and therefore, when the acrylonitrile component content is high, bad polymerization stability results and a latex cannot be stably obtained. As regards the technique for stably obtaining a latex with a high acrylonitrile content, there has been disclosed a production method of introducing an acidic group in not less than a fixed amount into the polymer produced at the polymerization under specific pressure and temperature conditions (see, for example, JP-B-54-41638 (the term "JP-B" as used herein means an "examined Japanese patent publication") and JP-B-55-2207). The method disclosed in these known documents is, however, only a method requiring a production apparatus such as autoclave or requiring a high temperature of 100°C or more, and an easier and simpler production method is not known.

Furthermore, the polymerizability of acrylonitrile in emulsion polymerization is usually not high, allowing an unreacted residual monomer to remain after polymerization, and the problem that acrylonitrile harmful to humans scatters at the coating and drying of the latex cannot be heretofore avoided.

To solve this problem, there is reported a method of removing the residual monomer from the acrylonitrile copolymer by azeotropy with methanol (see, for example, U.S. Patent 4,414,063). However, a solvent for azeotropy must be used and not only the production cost rises but also in the light of use of methanol harmful to humans, this is not an advantageous method in view of environmental safety.

In addition, the polymerization method using an emulsifier or a dispersant has a problem that when the latex is coated and dried to form a functional film, vigorous foam formation occurs and a trouble is caused in the coatability or coated surface state, and improvement is demanded in this regard.

Also, the polymerization method using an emulsifier, a dispersant, an ionic monomer for imparting dispersion stability, and an ionic polymerization initiator has a problem that water resistance decreases when the latex is coated and dried to form a functional film, and improvement is demanded in this regard.

### Summary of the Invention

The present invention has been made to solve those problems in conventional techniques, and the present invention provides a process for the industrially advantageous production of a polymer latex assured of excellent dispersion stability and excellent aptitude for environment without containing a residual monomer, so as to obtain a film having a high acrylonitrile content and being excellent in the gas barrier property, the resistance to chemicals such as acid, alkali and organic solvent, the mechanophysical properties such as flexural modulus, strength and creep resistance, and the water resistance.

As a result of intensive studies to solve the problems in conventional techniques, the present inventors have found the followings and accomplished the present invention.

A highly acrylonitrile-containing polymer latex excellent in the dispersion stability and completely free from a residual monomer is obtained by a method of performing the polymerization under atmospheric pressure and distilling away the residual monomer under atmospheric pressure.

Also, when a nonionic polymerization initiator is used and a specific nonionic monomer is copolymerized for imparting dispersion stability, a highly acrylonitrile-containing polymer latex excellent in the dispersion stability and completely free of an ionic group and a residual monomer can be obtained.

That is, the present invention is as follows.
(1) A process for producing a polymer latex, the process comprising:
   a step of mixing at least one kind of polymerizable monomer with water and a polymerization initiator to perform a polymerization,
   wherein
   the at least one kind of polymerizable monomer comprises an acrylonitrile in an amount of 50 mass% or more based on a total amount of the at least one kind of polymerizable monomer.
(2) The process according to (1), wherein
   the polymerization is performed at atmospheric pressure; and
   the process further comprises a step of distilling away a residual monomer at atmospheric pressure without adding a solvent.
(3) The process according to (2), wherein
   the distilling away step is performed by heating at 50 to 100°C.
(4) The process according to (2), wherein
   the distilling away step is performed under a nitrogen stream.
(5) The process according to (1), wherein
   the at least one kind of polymerizable monomer comprises the acrylonitrile in an amount of 80 mass% or more based on the total amount of the at least one kind of polymerizable monomer.
(6) The process according to (I), wherein
   the at least one kind of polymerizable monomer further comprises a polymerizable monomer having at least one acidic group selected from the group consisting of a sulfonic acid group, a sulfuric acid group, a carboxyl group and salts thereof.
(7) The process according to (1), wherein
   the at least one kind of polymerizable monomer further comprises a polyfunctional polymerizable monomer.
(8) The process according to (1), wherein
   the at least one kind of polymerizable monomer further comprises a nonionic polymerizable monomer having at least one functional group selected from the group consisting of a phosphoric acid group, a phosphoric ester group, a carboxyl group, a sulfonic acid group, an -OH group, a -(C₂H₄O)ₙ- group and -(C₃H₆O)ₙ- group;
   the polymerization initiator is a nonionic polymerization initiator; and
   the polymerization is performed in absence of a protective colloid and a surfactant.
(9) The process according to (8), wherein
   the nonionic polymerizable monomer has at least one functional group selected from the group consisting of an -OH group, a -(C₂H₄O)ₙ- group and a -(C₃H₆O)ₙ- group.
(10) The process according to (1), wherein
   the polymerization is performed at a temperature of 100°C or less.
(11) The process according to (1), wherein
   the polymerization is performed at a temperature of 90°C or less.
(12) The process according to (1), wherein
   the total amount of the at least one kind of polymerizable monomer is 20 mass% or less based on a total amount of a mixture for the polymerization.
(13) The process according to (1), wherein
   the total amount of the at least one kind of polymerizable monomer is 10 mass% or less based on a total amount of a mixture for the polymerization.
(14) The process according to (1), wherein
   the polymerization initiator is a persulfate-based polymerization initiator or an azo-based polymerization initiator.
(15) The process according to (8), wherein
   the nonionic polymerization initiator is a nonionic azo-based polymerization initiator.
(16) A polymer latex produced by the process according to (1), wherein
   the polymer latex contains no ionic group on or in a particle thereof.
(17) A film produced of the polymer latex according to (16).

### Detailed Description of the Invention

The present invention is described in detail below.

The present invention is a production process of a polymer latex having a high acrylonitrile content and exhibiting excellent dispersion stability and excellent aptitude for environment without containing a residual monomer, wherein a polymerizable monomer containing acrylonitrile in an amount of 50 mass% or more is mixed with water and a polymerization initiator soluble in water and polymerized (emulsion polymerization) under atmospheric pressure and thereafter, the residual monomer is distilled away at atmospheric pressure without adding a solvent.

The polymerizable monomer may contain a specific nonionic polymerizable monomer.

The emulsion polymerization in the present invention is an atmospheric-pressure soap-free polymerization not using.a protective colloid such as emulsifier and dispersant. If a protective colloid such as emulsifier and dispersant is used, vigorous foam formation sometimes occurs at the time of coating and drying the latex to form a functional film and a trouble may be caused in the coatability or coated surface state, which is one problem that the present invention purports to solve. If a protective colloid such as emulsifier and dispersant is used or an ionic monomer is copolymerized for imparting dispersion stability, the water resistance may be reduced when the latex is coated and dried to form a functional film, which is one problem that the present invention purports to solve.

In the polymerizable monomer for use in the present invention, acrylonitrile accounts for 50 mass% or more, preferably from 80 to 100 mass%, and one or more polymerizable monomers copolymerizable with the acrylonitrile accounts for from 0 to 50 mass%, preferably from 0 to 20 mass%. If the acrylonitrile content is less than 50 mass%, when a coating film is formed, the gas barrier property, the resistance to chemicals such as acid, alkali and organic solvent, and the mechanophysical properties such as flexural modulus, strength and creep resistance are not satisfied.

The polymerizable monomer copolymerizable with acrylonitrile, which is used in the present invention, may include a specific nonionic polymerizable monomer. Incidentally, in the present invention, the term "ionic" means to contain a salt structure, and the term "nonionic" means to contain no salt structure.

The nonionic polymerizable monomer is a nonionic hydrophilic monomer having a carbon-carbon unsaturated double bond and having a heretofore known or well-known acid group such as phosphoric acid group, phosphoric ester group, carboxyl group and sulfonic acid group, or a dispersion stability-imparting monomer having a group selected from the group consisting of an -OH group, a -(C₂H₄O)ₙ- group and - (C₃H₆O)ₙ- group.

Specific examples of the monomer having an acid group include a vinylsulfonic acid, an allylsulfonic acid, a methallylsulfonic acid, a p-styrenesulfonic acid, a sulfoethyl methacrylate, a sulfopropyl methacrylate, a sulfoethyl acrylate, a sulfopropyl acrylate, a 2-acrylamido-2-methyl-1-propanesulfonic acid, an acrylic acid and a methacrylic acid.

Specific examples of the monomer having a group selected from the group consisting of an -OH group, a -(C₂H₄O)ₙ- group and -(C₃H₆O)ₙ- group include BLEMMER GLM, BLEMMER GLM-R, BLEMMER E, BLEMMER PE-90, BLEMMER PE-200, BLEMMER PE-350, BLEMMER AE-90, BLEMMER AE-200, BLEMMER AE-400, BLEMMER P, BLEMMER PP-1000, BLEMMER PE-500, BLEMMER AP-400, BLEMMER AP-550, BLEMMER AP-800, BLEMMER PEP Series (70PEP-350B, 10PEP-550B), BLEMMER AEP Series, BLEMMER PET Series (55PET-400#, 30PET-800*, 55PET-800), BLEMMER AET Series, BLEMMER PPT Series (30PPT-800*, 50PPT-800*, 70PPT-800*), BLEMMER APT Series, BLEMMER PME Series (PME-100, PME-200, PME-400, PME-1000, PME-4000), BLEMMER AME Series (AME-400), BLEMMER 50POBP-800B and BLEMMER 50AOEP-800B.

The polymerizable monomer for use in the present invention may also contain a heretofore known or well-known compound copolymerizable with acrylonitrile and having a carbon-carbon unsaturated double bond, other than the above-described specific nonionic polymerizable monomer.

Examples thereof include monomers used in methacrylic acid copolymers, acrylic acid copolymers, itaconic acid copolymers, crotonic acid copolymers, maleic acid (anhydride) copolymers, partially esterified maleic acid copolymers and partially amidated maleic acid copolymers described in JP-A-59-44615 (the term "JP-A" as used herein means an "unexamined published Japanese patent application"), JP-B-54-34327, JP-B-58-12577, JP-B-54-25957, JP-A-59-53836 and JP-A-59-71048; (meth)acrylates; (meth)acrylamides; aromatic hydrocarbon rings having a vinyl group; heteroaromatic rings having a vinyl group; maleic anhydride; itaconic esters; crotonic esters; (meth)acrylonitrile; crotonnitrile; α-methylerotonnitrile; various styrenes; various benzoyloxyethylenes; various acetoxyethylenes; vinylcarbazoles; and vinylpyrrolidone.

Among these, preferred are a (meth)acrylic acid, an alkyl (meth)acrylate having a carbon number of 1 to 25 which may have a substituent, a cycloalkyl (meth)acrylate having a carbon number of 1 to 25 which may have a substituent, a bicyclo ring-containing (meth)acrylate having a carbon number of 1 to 25 which may have a substituent, an aralkyl (meth)acrylate having a carbon number of 1 to 25 which may have a substituent, an aryl (meth)acrylate having a carbon number of 1 to 25 which may have a substituent; a (meth)acrylamide, a secondary or tertiary alkyl (meth)acrylamide having a carbon number of 1 to 25 which may have a substituent, a secondary or tertiary cycloalkyl (medi)acrylarnide having a carbon number of 1 to 25 which may have a substituent, a secondary or tertiary, bicyclo ring-containing (meth)acrylamide having a carbon number of 1 to 25 which may have a substituent, a secondary or tertiary aralkyl (meth)acrylamide having a carbon number of 1 to 25 which may have a substituent, a secondary or tertiary aryl (meth)acrylamide having a carbon number of 1 to 25 which may have a substituent, a (meth)acryloylmorpholine having a carbon number of 1 to 25 which may have a substituent; a vinyl group-containing substituted or unsubstituted aromatic hydrocarbon ring having a carbon number of 1 to 25, a vinyl group-containing substituted or unsubstituted heteroaromatic ring having a carbon number of 1 to 25, a maleic anhydride, substituted or unsubstituted styrenes having a carbon number of 1 to 25, substituted or unsubstituted α-methylstyrenes having a carbon number of 1 to 25, a vinylimidazole, a vinyltriazole, a maleic anhydride, a substituted or unsubstituted partially esterified maleic acid copolymer having a carbon number of 1 to 25, a substituted or unsubstituted partially amidated maleic acid having a carbon number of 1 to 25, a methyl jasmonate; an itaconic acid, an alkyl itaconate having a carbon number of 1 to 25 which may have a substituent, a cycloalkyl itaconate having a carbon number of 1 to 25 which may have a substituent, a bicyclo ring-containing itaconic ester having a carbon number of 1 to 25 which may have a substituent, an aralkyl itaconate having a carbon number of 1 to 25 which may have a substituent, an aryl itaconate having a carbon number of 1 to 25 which may have a substituent; a crotonic acid, an alkyl crotonate having a carbon number of 1 to 25 which may have a substituent, a cycloalkyl crotonate having a carbon number of 1 to 25 which may have a substituent, a bicyclo ring-containing crotonic ester having a carbon number of 1 to 25 which may have a substituent, an aralkyl crotonate having a carbon number of 1 to 25 which may have a substituent, an aryl crotonate having a carbon number of I to 25 which may have a substituent; benzoyloxyethylenes having a carbon number of 1 to 25 which may have a substituent, acetoxyethylenes having a carbon number of 1 to 25 which may have a substituent, a (meth)acrylonitrile, a crotonnitrile, an α-methylcrotonnitrile, a vinylcarbazole having a carbon number of 1 to 25 which may have a substituent, and a vinylpyrrolidone.

More preferred are a (meth)acrylic acid, a (cyclo)alkyl (meth)acrylate having a carbon number of 1 to 20 which may have a substituent, a bicyclo ring-containing (meth)acrylate having a carbon number of 1 to 20 which may have a substituent, an aralkyl (meth)acrylate having a carbon number of 1 to 20 which may have a substituent, an aryl (meth)acrylate having a carbon number of 1 to 20 which may have a substituent; a (meth)acrylamide, a secondary or tertiary alkyl (meth)acrylamide having a carbon number of 1 to 20 which may have a substituent, a secondary or tertiary cycloalkyl (meth)acrylamide having a carbon number of 1 to 20 which may have a substituent, a secondary or tertiary, bicyclo ring-containing (meth)acrylamide having a carbon number of 1 to 20 which may have a substituent, a secondary or tertiary aralkyl (meth)acrylamide having a carbon number of 1 to 20 which may have a substituent, a secondary or tertiary aryl (meth)acrylamide having a carbon number of 1 to 20 which may have a substituent, a (meth)acryloylmorpholine having a carbon number of 1 to 20 which may have a substituent; a vinyl group-containing substituted or unsubstituted aromatic hydrocarbon ring having a carbon number of 1 to 20, a vinyl-containing substituted or unsubstituted heteroaromatic ring having a carbon number of 1 to 20, a maleic anhydride, a substituted or unsubstituted partially esterified maleic acid copolymer having a carbon number of 1 to 20, a substituted or unsubstituted partially amidated maleic acid having a carbon number of 1 to 20, substituted or unsubstituted styrenes having a carbon number of 1 to 20, substituted or unsubstituted α-methylstyrenes having a carbon number of 1 to 20, a methyl jasmonate; an itaconic acid, an alkyl itaconate having a carbon number of 1 to 20 which may have a substituent, a cycloalkyl itaconate having a carbon number of 1 to 20 which may have a substituent, a bicyclo ring-containing itaconic ester having a carbon number of 1 to 20 which may have a substituent, an aralkyl itaconate having a carbon number of 1 to 20 which may have a substituent, an aryl itaconate having a carbon number of 1 to 20 which may have a substituent; a crotonic acid, an alkyl crotonate having a carbon number of 1 to 20 which may have a substituent, a cycloalkyl crotonate having a carbon number of 1 to 20 which may have a substituent, a bicyclo ring-containing crotonic ester having a carbon number of 1 to 20 which may have a substituent, an aralkyl crotonate having a carbon number of 1 to 20 which may have a substituent, an aryl crotonate having a carbon number of 1 to 20 which may have a substituent, benzoyloxyethylenes having a carbon number of 1 to 20 which may have a substituent, acetoxyethylenes having a carbon number of 1 to 20 which may have a substituent, a vinylcarbazole having a carbon number of 1 to 20 which may have a substituent, a vinylpyrrolidone, a (meth)acrylonitrile, a crotonnitrile and an α-methylcrotonnitrile.

Still more preferred are a (meth)acrylic acid, a methyl (meth)acrylate which may have a substituent, an ethyl (meth)acrylate which may have a substituent, a linear or branched propyl (meth)acrylate which may have a substituent, a linear or branched butyl (meth)acrylate which may have a substituent, a linear or branched pentyl (meth)acrylate which may have a substituent, an n-hexyl (meth)acrylate which may have a substituent, a cyclohexyl (meth)acrylate which may have a substituent, an n-heptyl (meth)acrylate which may have a substituent, a 2-ethylhexyl (meth)acrylate which may have a substituent, an n-octyl (meth)acrylate which may have a substituent, an n-decyl (meth)acrylate which may have a substituent, an n-dodecyl (meth)acrylate which may have a substituent; an adamantyl (meth)acrylate which may have a substituent, an isobornyl (meth)acrylate which may have a substituent, a norbornanemethyl (meth)acrylate which may have a substituent, a norbornenemethyl (meth)acrylate which may have a substituent, a benzyl (meth)acrylate which may have a substituent, a naphthylmethyl (meth)acrylate which may have a substituent, an anthracenemethyl (meth)acrylate which may have a substituent, a phenylethyl (meth)acrylate which may have a substituent, a phenyl (meth)acrylate which may have a substituent, a naphthyl (meth)acrylate which may have a substituent; a (meth)acrylamide, a methyl or dimethyl (meth)acrylamide which may have a substituent, an ethyl or diethyl (meth)acrylamide which may have a substituent, a linear or branched propyl or dipropyl (meth)acrylamide which may have a substituent, a linear or branched butyl or dibutyl (meth)acrylamide which may have a substituent, a linear or branched pentyl or dipentyl (meth)acrylamide which may have a substituent, a n-hexyl or di-n-hexyl (meth)acrylamide which may have a substituent, a cyclohexyl or dicyclohexyl (meth)acrylamide which may have a substituent, a 2-ethylhexyl or di-2-ethylhexyl (meth)acrylamide which may have a substituent, an adamantyl (meth)acrylamide which may have a substituent, a noradamantyl (meth)acrylamide which may have a substituent, a benzyl (meth)acrylamide which may have a substituent, a naphthylethyl (meth)acrylamide which may have a substituent, a phenylethyl (meth)acrylamide which may have a substituent, a phenyl or diphenyl (meth)acrylamide which may have a substituent, a naphthyl (meth)acrylamide which may have a substituent, a (meth)acryloylmorpholine which may have a substituent, a piperidyl acrylamide which may have a substituent, a pyrrolidyl acrylamide which may have a substituent; a styrene, an α-methylstyrene, a vinylpyridine, a vinylimidazole, a vinyltriazole, a maleic anhydride, a methyl jasmonate, a maleimide, an (N-substituted) maleimide; an itaconic acid, a crotonic acid, a methyl crotonate which may have a substituent, an ethyl crotonate which may have a substituent, a linear or branched propyl crotonate which may have a substituent, a linear or branched butyl crotonate which may have a substituent, a linear or branched pentyl crotonate which may have a substituent, a n-hexyl crotonate which may have a substituent, a cyclohexyl crotonate which may have a substituent, an n-heptyl crotonate which may have a substituent, a 2-ethylhexyl crotonate which may have a substituent, an n-octyl crotonate which may have a substituent, an n-decyl crotonate, an n-dodecyl crotonate which may have a substituent, an adamantyl crotonate which may have a substituent, an isobornyl crotonate which may have a substituent, a norbornanemethyl crotonate which may have a substituent, a norbornenemethyl crotonate which may have a substituent, a benzyl crotonate which may have a substituent, a naphthylmethyl crotonate which may have a substituent, an anthracenemethyl crotonate which may have a substituent, a phenylethyl crotonate which may have a substituent, a phenyl crotonate which may have a substituent, a naphthyl crotonate which may have a substituent; a benzoyloxyethylene which may have a substituent, an acetoxyethylene which may have a substituent, a vinylcarbazole which may have a substituent, a vinylpyrrolidone which may have a substituent, an acrylonitrile which may have a substituent, and a methacrylonitrile which may have a substituent.

The above-described carboxyl group may be in the form of a metal salt.

Preferred examples of the substituent include an alkyl group having a carbon number of 1 to 20, an alkoxy group having a carbon number of 1 to 20, an aralkyl group having a carbon number of 1 to 20, an aryl group having a carbon number of 1 to 20, an acyloxy group having a carbon number of 1 to 20, an acyl group having a carbon number of 1 to 20, an alkoxycarbonyl group having a carbon number of 1 to 20, an arylcarbonyl group having a carbon number of 1 to 20, a dialkylamino group having a carbon number of 1 to 20, an alkylamino group having a carbon number of 1 to 20, a halogen atom, a cyano group, a furyl group, a furfuryl group, a tetrahydrofuryl group, a tetrahydrofurfuryl group, an alkylthio group, a trimethylsilyl group, a trifluoromethyl group, a carboxyl group, a thienyl group, a morpholino group, a morpholinocarbonyl group, a vinyl group, an -SO₃M group (M is H, Na or K), a -COOM group (M is H, Na or K), a (meth)acryloyloxy group and a phenyl group.

Among these, more preferred are an alkyl group having a carbon number of 1 to 15, an alkoxy group having a carbon number of 1 to 15, an aralkyl group having a carbon number of I to 15, an aryl group having a carbon number of 1 to 15, an acyloxy group having a carbon number of 1 to 15, an acyl group having a carbon number of 1 to 15, an alkoxycarbonyl group having a carbon number of 1 to 15, an arylcarbonyl group having a carbon number of 1 to 15, a dialkylamino group having a carbon number of 1 to 15, an alkylamino group having a carbon number of 1 to 15, a halogen atom, a cyano group, a furyl group, a furfuryl group, a tetrahydrofuryl group, a tetrahydrofurfuryl group, an alkylthio group, a trimethylsilyl group, a trifluoromethyl group, a carboxyl group, a thienyl group, a morpholino group, a morpholinocarbonyl group, a vinyl group, an -SO₃M group (M is H, Na or K), a -COOM group (M is H, Na or K), a (meth)acryloyloxy group and a phenyl group.

Still more preferred are a methyl group, an ethyl group, a linear or branched propyl group, a linear or branched butyl group, a linear or branched pentyl group, a n-hexyl group, a cyclohexyl group, a n-heptyl group, a 2-ethylhexyl group, an n-octyl group, an n-decyl group, a n-dodecyl group, a methyloxy group, an ethyloxy group, a linear or branched propyloxy group, a linear or branched butyloxy group, a linear or branched pentyloxy group, a n-hexyloxy group, a cyclohexyl group, a n-heptyloxy group, a 2-ethylhexyloxy group, an n-octyloxy group, an n-decyloxy group, an n-dodecyloxy group, a benzyl group, a phenethyl group, a naphthylmethyl group, a naphthylethyl group, a phenyl group, a naphthyl group: a methylcarbonyloxy group, an ethylcarbonyloxy group, a linear or branched propylcarbonyloxy group, a linear or branched butylcarbonyloxy group, a linear or branched pentylcarbonylxoy group, an n-hexylcarbonyloxy group, a cyclohexylcarbonyloxy group, an n-heptylcarbonyloxy group, a 2-ethylhexylcarbonyloxy group, an n-octylcarbonyloxy group, an n-decylcarbonyloxy group, an n-dodecylcarbonyloxy group; a methylcarbonyl (acetyl) group, an ethylcarbonyl group, a linear or branched propylcarbonyl group, a linear or branched butylcarbonyl group, a linear or branched pentylcarbonyl group, an n-hexylcarbonyl group, a cyclohexylcarbonyl group, an n-heptylcarbonyl group, a 2-ethylhexylcarbonyl group, an n-octylcarbonyl group, an n-decylcarbonyl group, an n-dodecylcarbonyl group; a methyloxycarbonyl group, an ethyloxycarbonyl group, a linear or branched propyloxycarbonyl group, a linear or branched butyloxycarbonyl group, a linear or branched pentyloxycarbonyl group, an n-hexyloxycarbonyl group, a cyclohexyloxycarbonyl group, an n-heptyloxycarbonyl group, a 2-ethylhexyloxycarbonyl group, an n-octyloxycarbonyl group, an n-decyloxycarbonyl group, an n-dodecyloxycarbonyl group, a benzoyl group, a naphthylcarbonyl group; a methyl- or dimethylamino group, an ethyl- or diethylamino group, a linear or branched propyl- or dipropylamino group, a linear or branched butyl- or dibutylamino group, a linear or branched pentyl- or dipentylamino group, an n-hexyl- or di-n-hexylamino group, a cyclohexyl- or dicyclohexylamino group, an n-heptyl or di-n-heptylamino group, a 2-ethylhexyl- or di-(2-ethylhexyl)amino group; a fluorine atom, a chlorine atom, a bromine atom, a cyano group, a furyl group, a furfuryl group, a tetrahydrofuryl group, a tetrahydrofurfuryl group, an alkylthio group, a trimethylsilyl group, a trifluoromethyl group, a carboxyl group, a thienyl group, a morpholino group, a morpholinocarbonyl group, a vinyl group, an -SO₃M group (M is H, Na or K), a - COOM group (M is H, Na or K), a (meth)acryloyloxy group and a phenyl group.

These substituents each may be further substituted by the above-described substituent.

As regards other copolymerizable monomers, for example, a hydrophilic monomer containing a phosphoric acid group, a phosphoric ester group, a quaternary ammonium salt group, an ethyleneoxy chain, a propyleneoxy chain, a sulfonic acid group, a base thereof, a morpholinoethyl group or the like is also useful.

Furthermore, the above-described sulfonic acid group and carboxylic acid group each may be in the form of a divalent or greater metal salt.

Among the polymerizable monomers copolymerized with the acrylonitrile, a polymerizable monomer having at least one acidic group selected from the group consisting of a sulfonic acid group, a sulfuric acid group, a carboxyl group and salts thereof is useful. Specific examples thereof include a vinylsulfonic acid, an allylsulfonic acid, a methallylsulfonic acid, a p-styrenesulfonic acid, a sulfoethyl methacrylate, a sulfopropyl methacrylate, a sulfoethyl acrylate, a sulfopropyl acrylate, a 2-acrylamido-2-methyl-1-propanesulfonic acid, an acrylic acid, a methacrylic acid, and their salts (such as alkali metal salt (e.g., Na, K, Li) and ammonium salt (e.g., tetramethylammonium, tetraethylammonium, tetrapropylammonium, tetrabutylammonium)).

One of these acid group-containing polymerizable monomers may be used alone, or a plurality of species thereof may be mixed and used.

The acidic group-containing polymerizable monomer preferably accounts for 45 mass% or less, more preferably 40 mass% or less, still more preferably 35 mass% or less, in all monomers.

The number of monomer species copolymerized is not particularly limited but is preferably from 1 to 12, more preferably from 1 to 8, still more preferably from 1 to 5.

Also, in the present invention, a polyfunctional polymerizable monomer can be used as the polymerizable monomer. Particularly, from the standpoint that the dispersion stability of the latex synthesized is enhanced, it is sometimes preferred to form a ternary polymer latex by using a polyfunctional monomer. The polyfunctional polymerizable monomer is not particularly limited as long as it is a monomer having two or more polymerizable groups in its molecule.

Examples of the polyfunctional polymerizable monomer include ethylene glycol diacrylate, ethylene glycol dimethacrylate, diethylene glycol dimethacrylate, diethylene glycol diacrylate, glycerol dimethacrylate, glycerol diacrylate, 1,6-hexanediol dimethacrylate, divinylbenzene, pentaerythritol tetraacrylate, dipentaerythritol hexaacrylate, dipentaerythritol pentaacrylate.

The polyfunctional polymerizable monomer preferably accounts for 45 mass% or less, more preferably 40 mass% or less, still more preferably 35 mass% or less, in the total amount of the polymerizable monomer.

In the present invention, the average particle size of the polymer latex is preferably 5 µm or less in view of dispersion stability, more preferably 4 µm or less, still more preferably 3 µm or less.

The pressure at the emulsion polymerization reaction in the production process of the present invention is preferably not more than an atmospheric pressure because the production can be performed by a simple apparatus, and an atmospheric pressure is most preferred.

The polymerization reaction temperature at the emulsion polymerization is not particularly limited as long as the polymerization reaction can proceed, but in view of simple and easy production, the polymerization reaction is preferably performed at 300°C or less, more preferably 200°C or less, still more preferably 100°C or less, and most preferably 90°C or less. Also, the lower limit of the polymerization reaction temperature is preferably 10°C or more, more preferably 20°C or more.

Out of the polymerization initiators used in the polymerization, a polymerization initiator soluble in water is preferably used. Preferred initiators are a peroxide-based polymerization initiator and an azo-based polymerization initiator, and in view of reactivity and the like, a persulfate-based polymerization initiator and an azo-based polymerization initiator are preferably used.

Among these, preferred are benzoyl peroxide, di-tert-butyl peroxide, lauroyl peroxide, tert-butyl hydroperoxide, cumene hydroperoxide, ammonium persulfate, potassium persulfate, acetyl peroxide, tetramethylthiuram disulfide, azobisisobutyronitrile, azobiscyclohexanenitrile, phenylazotriphenylmethane, VA-086, V-50, VA-044 and V-501 (all azo-based water-soluble initiators produced by Wako Pure Chemical Industries, Ltd.), more preferred are benzoyl peroxide, di-tert-butyl peroxide, lauroyl peroxide, tert-butyl hydroperoxide, cumene hydroperoxide, ammonium persulfate, potassium persulfate, acetyl peroxide, azobisisobutyronitrile, azobiscyclohexanenitrile, VA-086, V-50, VA-044 and V-501, and still more preferred are ammonium persulfate, potassium persulfate, azobisisobutyronitrile, azobiscyclohexanenitrile, VA-086, V-50, VA-044 and V-501.

Out of the polymerization initiators used in the polymerization, a nonionic polymerization initiator is preferably used. Preferred nonionic polymerization initiators are a peroxide-based polymerization initiator and an azo-based polymerization initiator are preferred.

Among these, preferred are benzoyl peroxide, di-tert-butyl peroxide, lauroyl peroxide, tert-butyl hydroperoxide, cumene hydroperoxide, acetyl peroxide, tetramethylthiuram disulfide, azobisisobutyronitrile, azobiscyclohexanenitrile, phenylazotriphenylmethane, VA-086 and V-501 (both azo-based water-soluble initiators produced by Wako Pure Chemical Industries, Ltd.), more preferred are benzoyl peroxide, di-tert-butyl peroxide, lauroyl peroxide, tert-butyl hydroperoxide, cumene hydroperoxide, acetyl peroxide, azobisisobutyronitrile, azobiscyclohexanenitrile, VA-086 and V-501, and still more preferred are benzoyl peroxide, di-tert-butyl peroxide, tert-butyl hydroperoxide, cumene hydroperoxide, acetyl peroxide, azobisisobutyronitrile, azobiscyclohexanenitrile, VA-086 and V-501.

In the emulsion polymerization, the total amount of polymerizable monomer in the mixture for polymerization reaction is preferably 50 mass% or less in view of dispersion stability, more preferably 40 mass% or less, still more preferably 30 mass% or less, and most preferably 20 mass% or less.

In the emulsion polymerization, the amount of the polymerization initiator is, in view of dispersion stability, cost and the like, preferably 30 mass% or less, more preferably 20 mass% or less, still more preferably 10 mass% or less, based on the total amount of polymerizable monomer.

The removal by distillation of the unreacted residual monomer after emulsion polymerization may be performed under reduced pressure or atmospheric pressure but is preferably performed under atmospheric pressure in view of easy and simple production. Also, the removal by distillation may be performed under a stream of nitrogen, argon or air, but from the standpoint of preventing polymerization of the monomer in the process of removal by distillation or in view of profitability, the removal is most preferably performed under a nitrogen stream.

Furthermore, the removal of the residual monomer by distillation may be performed under heating or at an ordinary temperature, but in view of simplification of the production equipment, process efficiency or the like, removal by distillation under heating is preferred as the method for removal by distillation. The temperature at the removal by distillation is preferably from 30 to 200°C, more preferably from 40 to 150°C, still more preferably from 50 to 100°C,

In another method, the latex produced after polymerization may be salted out/filtered by adding, for example, an inorganic salt such as sodium hydrogencarbonate and sodium chloride, to remove the unreacted monomer.

### [Examples]

The present invention is described in greater detail below by referring to Examples and the like, but the present invention is not limited to these Examples and the like.

The analysis means used in Examples and the like of the present invention are as follows.

### (A) Amount of Aggregate Generated at Polymerization

After the completion of emulsion polymerization, all the latex in the polymerization kettle was filtered through a 400-mesh wire cloth, the solid matter remaining on the wire cloth was washed with water and dried, and the mass was measured and expressed by the mass fraction based on the monomer mixture used for the polymerization.

### (B) Stability of Latex

The latex synthesized was left standing at ordinary temperature for 3 days and whether a precipitate was generated or not was observed with an eye.

### (C) Particle Size

The particle size was measured in a usual manner by using a laser diffraction/scattering particle size distribution measuring apparatus (HORIBA, LA-910).

### (D) Measurement of Residual Monomer

NMR (solvent: heavy DMSO) was used for confirmation of the presence or absence of the unreacted monomer or for quantitative determination of the unreacted monomer.

### (E) Measurement of Amount of Solid Contents

The latex solution was weighed in an aluminum pan and vacuum-dried at 130°C for 2 hours. The amount of solid contents was calculated from the change in mass after drying.

### [Example 1]

To a 200 ml-volume three-neck flask equipped with a mechanical stirrer, 118 g of water, 4.8 g of acrylonitrile, 0.2 g of sodium methacryloyloxyethylsulfonate (sulfoethyl methacrylate Na salt, SEM) and 1.19 g of divinylbenzene were added. Subsequently, the inside of the system was nitrogen-purged, and a nitrogen flow was then started (flow rate: 10 ml/min). Furthermore, the temperature was elevated to 70°C and while stirring at a rotation speed of 300 rpm, potassium persulfate (KPS, 0.27 g) was added. After the addition, the system was stirred at 70°C for 3 hours. Thereafter, the temperature was elevated to 95°C, and the system was then stirred under a nitrogen flow at a flow rate of 100 ml/min for 2 hours. Distilled acrylonitrile was trapped by a Dean-Stark tube equipped with a condenser tube.

The amount of solid contents, the amount of aggregate generated at polymerization, the stability of latex, the particle size and the residual monomer amount are as shown in Table 1.

As seen from Table 1, a polymer latex having a high acrylonitrile content, not containing a residual monomer and exhibiting high dispersion stability was obtained using a simple production apparatus.

### [Examples 2 to 5]

Emulsion polymerization was performed in the same manner as in Example 1 except that the kind and amount of the copolymerization monomer and the initiator species are changed as indicated in Table 1. The results are shown in Table 1.

### [Comparative Example 1]

In Example 1, after the addition of potassium persulfate, the system was stirred at 70°C for 3 hours and the reaction was completed without performing the operation of removing the residual monomer by distillation. The results obtained are shown in Table 1. A large amount of unreacted monomer remained in the obtained polymer.

### [Comparative Example 2]

Emulsion polymerization was performed in the same manner as in Example 1 except that in Example 1, potassium sulfate was changed to BPO (benzoyl peroxide). As a result, BPO was not dissolved and polymerization scarcely proceeded.

**Table 1**

| Example No. | Amount of Acrylonitrile (g) | Copolymerization Monomer 1 Kind and Amount (g) | Copolymerization Monomer 2 Kind and Amount (g) | Polymerization Initiator | Amount of Solid Contents (mass%) | Amount of Aggregate Generated at Polymerization (g) | Stability of Latex | Particle Size (nm) | Residual Amount (g) |
|---|---|---|---|---|---|---|---|---|---|
| 1 | 4.80 | divinylbenzene 1.19 | SEM 0.2 | KPS | 4.50 | 0.00 | no precipitate | 137 | 0.00 |
| 2 | 4.55 | divinylbenzene 1.15 | AMPS 0.46 | KPS | 4.72 | 0.00 | no precipitate | 227 | 0.00 |
| 3 | 3.49 | divinylbenzene 0.48 | AMPS 1.51 | APS | 4.70 | 0.00 | no precipitate | 135 | 0.00 |
| 4 | 2.54 | SPSS 2.46 | none | KPS | 5.80 | 0.00 | no precipitate | 92 | 0.00 |
| 5 | 4.53 | divinylbenzene 1.14 | SEM 0.47 | KPS | 4.61 | 0.00 | no precipitate | 79 | 0.00 |
| Comparative Example 1 | 4.80 | divinylbenzene 1.19 | SEM 0.2 | KPS | 3.88 | 0.00 | no precipitate | 150 | 22.50 |
| Comparative Example 2 | 4.80 | divinylbenzene 1.19 | SEM 0.2 | BPO | Polymerization scarcely proceeded. | | | | |

| | | | | | | | | | |
|---|---|---|---|---|---|---|---|---|---|
| AMPS: 2-acrylamido-2-methyl-1-propanesulfonic acid, APS: ammonium persulfate, KPS: potassium persulfate, and SPSS: p-styrenesulfonate Na salt | | | | | | | | | |

### [Example 6]

To a 200 ml-volume three-neck flask equipped with a mechanical stirrer, 100 g of water, 1.83 g of acrylonitrile and 0.67 g of BLEMMER PE90 were added. Subsequently, the inside of the system was nitrogen-purged, and a nitrogen flow was then started (flow rate: 10 ml/min). Furthermore, the temperature was elevated to 70°C and while stirring at a rotation speed of 300 rpm, VA-086 (KPS, 0.22 g) was added. After the addition, the system was stirred at 70°C for 3 hours. Thereafter, the temperature was elevated to 95°C, and the system was then stirred under a nitrogen flow at a flow rate of 100 ml/min for 2 hours. Distilled acrylonitrile was trapped by a Dean-Stark tube equipped with a condenser tube.

The amount of solid contents, the amount of aggregate generated at polymerization, the stability of latex, the particle size and the residual monomer amount are as shown in Table 1.

### [Examples 7 to 11]

Emulsion polymerization was performed in the same manner as in Example 6 except that the kind and amount of the copolymerization monomer and the initiator species are changed as indicated in Table 2. The results are shown in Table 2.

### [Comparative Example 3]

Emulsion polymerization was performed in the same manner as in Example 6 except that the kind and amount of the copolymerization monomer and the initiator species are changed as indicated in Table 2. The results are shown in Table 2.

### [Comparative Example 4]

Emulsion polymerization was performed in the same manner as in Example 6 except that the kind and amount of the copolymerization monomer and the initiator species are changed as indicated in Table 2. The results are shown in Table 2.

As seen from Table 2, a polymer latex having a high acrylonitrile content, not containing a residual monomer and exhibiting high dispersion stability was obtained using a simple production apparatus.

In the case of a copolymer of acrylonitrile and a general (met)acryl ester-based monomer, dispersion stability could be hardly imparted and aggregation occurred during polymerization, failing in obtaining a polymer latex. It is revealed that an acidic group such as AMPS or an alkyleneoxy group such as BLEMMER is necessary for imparting dispersion stability to an ionic group-free latex unseen in conventionally known arts.

**Table 2**

| Example No. | Amount of Acrylonitrile (g) | Copolymerization Monomer 1 Amount of Copolymerization Monomer (g) | Copolymerization Monomer 2 Amount of Copolymerization Monomer (g) | Polymerization Initiator | Amount of Solid of Contents (mass%) | Amount of Aggregate Generated at Polymerization (g) | Stability of Latex | Particle Size (nm) | Residual Monomer Amount (g) |
|---|---|---|---|---|---|---|---|---|---|
| 6 | 1.83 | BLEMMER PE90 0.67 | none | VA-086 | 2.50 | 0.00 | no precipitate | 400 | 0.00 |
| 7 | 1.83 | BLEMMER PE90 0.67 | none | V-501 | 2.45 | 0.00 | no precipitate | 350 | 0.00 |
| 8 | 2.07 | divinylbenzene 0.27 | AMPS 0.43 | VA-086 | 2.70 | 0.00 | no precipitate | 250 | 0.00 |
| 9 | 1.85 | BLEMMER PE200 0.67 | none | VA-086 | 2.51 | 0.00 | no precipitate | 300 | 0.00 |
| 10 | 1.85 | divinylbenzene 0.27 | BLEMMER PE200 0.67 | VA-086 | 2.75 | 0.00 | no precipitate | 330 | 0.00 |
| 11 | 1.93 | BLEMMER PE90 0.67 | none | BPO | 2.50 | 0.00 | no precipitate | 370 | 0.00 |
| Comparative Example 3 | 1.83 | butyl methacrylate 0.67 | none | VA-086 | aggregated during polymerization | | | | |
| Comparative Example 4 | 4.80 | divinylbenzene 1.19 | SEM 0.2 | KPS | 4.50 | 0.00 | no precipitate | 137 | 0.00 |

| | | | | | | | | | |
|---|---|---|---|---|---|---|---|---|---|
| AMPS: 2-acrylamido-2-methyl-1-propanesulfonic acid, BPO: benzoyl persulfate, KPS: potassium persulfate, and SEM: p-sulfoethyl methacrylate Na salt. | | | | | | | | | |

### [Example 12 and Comparative Example 5]

A film coating (film) was obtained using the latex obtained in Example 10 or Comparative Example 4. The oxygen permeability and water resistance of the film obtained are as shown in Table 3.

### (A) Water Resistance

The latex obtained in Example 10 was coated using a rod on a stretched polyester film to have a dry coated mass of 160 mg/m² and dried at 125°C for 30 seconds in a hot air-circulating drier to obtain a film coating.

The film coating obtained was dipped in water for 3 minutes, and the change of the film was observed with an eye.

### (B) Oxygen Permeability

The oxygen permeability was measured using an oxygen permeability meter (OX-TRAN2/20, manufactured by MOCON) according to the measuring method in JIS K7126B. More specifically, a 0.1 mm-thick polymer film formed by coating a polymer solution on a water-resistant paper support and drying it was used as the sample for measurement. The measurement conditions were a test temperature of 25°C, a test humidity of 60% RH and a gas concentration of 100%.

**Table 3**

| Example No. | Latex Used | Oxygen Permeability (ml/m²/24 h/atm) | Water Resistance |
|---|---|---|---|
| 12 | Example 10 | 135 | no change |
| Comparative Example 5 | Comparative Example 4 | 230 | whitely turbid |

The film using the ionic group-free latex of Example 12 does not contain a hydrophilic ionic group and therefore, exhibits high water resistance and high oxygen-blocking property. On the other hand, the film formed of the latex of Comparative Example 4 using an ionic copolymerization monomer and an ionic initiator has a hydrophilic ionic group and therefore, readily absorbs moisture, as a result, bad water resistance, high oxygen permeability and low oxygen-blocking property are exhibited.

According to the production process of the present invention, an acrylonitrile-containing polymer latex containing acrylonitrile in a high concentration, not containing a residual monomer, and exhibiting high dispersion stability can be obtained using a simple production apparatus.

As a result, the problem that a harmful residual monomer evaporates when the latex is coated and dried to form a film can be overcome, and environmental safety can be afforded.

Furthermore, the latex with a high acrylonitrile content of the present invention can stably provide a film excellent in the gas barrier property, the resistance to chemicals such as acid, alkali and organic solvent, and the mechanophysical properties such as flexural modulus, strength and creep resistance.

The latex obtained by the present invention has a high acrylonitrile content and therefore, can exert excellent performance inherent in the acrylonitrile. Also, the latex can be dried at a lower temperature in a shorter time than conventional high-nitrile copolymer latexes. Particularly, a gas barrier film obtained by coating a plastic film with a film comprising the latex obtained by the present invention can be used as a gas barrier packaging material containing no chlorine atom.

The entire disclosure of each and every foreign patent application from which the benefit of foreign priority has been claimed in the present application is incorporated herein by reference, as if fully set forth.

## Claims

1. A process for producing a polymer latex, the process comprising:
a step of mixing at least one kind of polymerizable monomer with water and a polymerization initiator to perform a polymerization,
wherein
the at least one kind of polymerizable monomer comprises an acrylonitrile in an amount of 50 mass% or more based on a total amount of the at least one kind of polymerizable monomer.

2. The process according to claim 1, wherein
the polymerization is performed at atmospheric pressure; and
the process further comprises a step of distilling away a residual monomer at atmospheric pressure without adding a solvent.

3. The process according to claim 2, wherein
the distilling away step is performed by heating at 50 to 100°C.

4. The process according to claim 2, wherein
the distilling away step is performed under a nitrogen stream.

5. The process according to claim 1, wherein
the at least one kind of polymerizable monomer comprises the acrylonitrile in an amount of 80 mass% or more based on the total amount of the at least one kind of polymerizable monomer.

6. The process according to claim 1, wherein
the at least one kind of polymerizable monomer further comprises a polymerizable monomer having at least one acidic group selected from the group consisting of a sulfonic acid group, a sulfuric acid group, a carboxyl group and salts thereof.

7. The process according to claim 1, wherein
the at least one kind of polymerizable monomer further comprises a polyfunctional polymerizable monomer.

8. The process according to claim 1, wherein
the at least one kind of polymerizable monomer further comprises a nonionic polymerizable monomer having at least one functional group selected from the group consisting of a phosphoric acid group, a phosphoric ester group, a carboxyl group, a sulfonic acid group, an -OH group, a -(C₂H₄O)ₙ- group and -(C₃H₆O)ₙ- group;
the polymerization initiator is a nonionic polymerization initiator; and
the polymerization is performed in absence of a protective colloid and a surfactant.

9. The process according to claim 8, wherein
the nonionic polymerizable monomer has at least one functional group selected from the group consisting of an -OH group, a -(C₂H₄O)ₙ- group and a -(C₃H₆O)ₙ- group.

10. The process according to claim 1, wherein
the polymerization is performed at a temperature of 100°C or less.

11. The process according to claim 1, wherein
the polymerization is performed at a temperature of 90°C or less.

12. The process according to claim 1, wherein
the total amount of the at least one kind of polymerizable monomer is 20 mass% or less based on a total amount of a mixture for the polymerization.

13. The process according to claim 1, wherein
the total amount of the at least one kind of polymerizable monomer is 10 mass% or less based on a total amount of a mixture for the polymerization.

14. The process according to claim 1, wherein
the polymerization initiator is a persulfate-based polymerization initiator or an azo-based polymerization initiator.

15. The process according to claim 8, wherein
the nonionic polymerization initiator is a nonionic azo-based polymerization initiator.

16. A polymer latex produced by the process according to claim 1,
wherein
the polymer latex contains no ionic group on or in a particle thereof.

17. A film produced of the polymer latex according to claim 16.
